# EUROPÄISCHE PATENTSCHRIFT

(11) **EP 2 838 783 B1**
(45) Veröffentlichungstag und Bekanntmachung des Hinweises auf die Patenterteilung: **04.10.2017**
(21) Anmeldenummer: 13722688.2
(22) Anmeldetag: 15.04.2013
(51) Int. Cl.: B62M 6/55

(54) **ANTRIEBSEINRICHTUNG FÜR EIN ELEKTRORAD**
DRIVE DEVICE FOR AN ELECTRIC BICYCLE
ANTRIEBSEINRICHTUNG FÜR EIN ELEKTRORADDISPOSITIF D'ENTRAÎNEMENT POUR UNE BICYCLETTE ÉLECTRIQUE

(30) Priorität: 17.04.2012 DE 102012103355
(43) Veröffentlichungstag der Anmeldung: 25.02.2015
(73) Patentinhaber: Brose Fahrzeugteile GmbH & Co. Kommanditgesellschaft, Coburg, Max-Brose-Straße 1 96450 Coburg (DE)
(72) Erfinder: GETTA, Udo, 10409 Berlin (DE); NOACK, Ullrich, 10405 Berlin (DE); FLEISCHMANN, Karl-Heinz, 16348 Marienwerder (DE)
(74) Vertreter: Maikowski & Ninnemann Patentanwälte Partnerschaft mbB
(86) Internationale Anmeldenummer: PCT/EP2013/057811
(87) Internationale Veröffentlichungsnummer: WO 2013/156445

(56) Entgegenhaltungen:
- EP-A1- 0 763 462
- EP-A1- 2 216 242
- EP-A2- 1 110 856
- DE-A1-102009 045 447
- DE-A1-102010 009 649
- US-A- 6 152 251

## Beschreibung

Die Erfindung betrifft eine Antriebseinrichtung für ein Elektrorad, insbesondere für ein elektromotorisch und mit Muskelkraft hybrid betriebenes Pedelec, gemäß dem Oberbegriff des Anspruchs 1.

Eine Antriebseinrichtung für ein Elektrorad ermöglicht prinzipiell drei Betriebszustände:
- einen Fahrradbetrieb mit alleiniger Muskelkraftbetätigung,
- einen E-Bike-Betrieb mit alleinigem elektromotorischem Antrieb oder
- einen Pedelecbetrieb mit elektromotorisch unterstützter Muskelkraftbetätigung, wobei ein Elektromotor ohne Treten der Pedale mit Ausnahme eines Einsatzes als Schiebe- oder Anfahrhilfe bis zu einer Geschwindigkeit von 6 km/h keine Leistung abgibt. Für das Einschalten oder die Steuerung des Elektromotors eines Pedelecs kann
   - die Kraft - über das Signal eines Kraftsensors - an den Pedalen, der Tretkurbel, der Kette oder am Rad, aber auch das über Drehmomentsensoren zu erfassende Drehmoment, das durch die Tretkurbelwelle übertragen wird,
   - die Tretgeschwindigkeit über das Signal eines Drehzahlsensors,
   - die Geschwindigkeit des Fahrzeugs durch Sensoren am Rad oder berührungslos, durch radunabhängig messende Geschwindigkeitsserisoren, wie zum Beispiel Radarwellen oder Ultraschall nutzende Messeinrichtungen, insbesondere um den Elektromotorantrieb ab einer Geschwindigkeit von 25 km/h (bei zulassungsfreien Pedelecs) oder von 45 km/h (bei Speedpedelecs) auszuschalten,
   - die Beschleunigung
gemessen und die Messung mechanisch oder elektronisch weiterverarbeitet werden, um den Elektromotor ein- und auszuschalten oder anhand einer Steuerfunktion stufenlos zu regeln.

Die in den Elektromotor eingespeiste Leistung wird aufgrund der Sensordaten in Abhängigkeit von einem gewählten Unterstützungsgrad von der Motorsteuerung berechnet, so dass der Elektromotor automatisch einen bestimmten Prozentsatz der vom Fahrer erbrachten Leistung dazugibt. Der Unterstützungsgrad bzw. Prozentsatz der vom Elektromotor dazu zu gebenden Leistung kann in mehreren Stufen eingestellt oder vom Hersteller oder einem Monteur fest vorgegeben werden.

Aus der EP 2 216 242 A1 ist eine Antriebseinrichtung mit einem Elektroantrieb für ein mit Muskelkraft betriebenes Zweirad bekannt, die eine Einbauhülse, die in einer Büchse eines Rahmenteils des Zweirades verankert ist, eine Kurbelwelle, an deren Enden mit Pedalen verbundene Kurbeln zur Muskelkraftbetätigung vorgesehen sind und eine koaxial zur Kurbelwelle gelagerten Antriebshülse, die in der Einbauhülse gelagert ist, aufweist. Die Antriebshülse enthält an einem Ende eine Adapterscheibe, die mit einem Kettenrad verbunden ist. Zwischen der Kurbelwelle und der Antriebshülse ist als drehrichtungsabhängige Kupplung ein Tretkurbelfreilauf angeordnet, während die Antriebshülse über einen Antriebsfreilauf und ein Getriebe mit dem Rotor eines Elektromotors verbunden ist. Zur Ermittlung des Drehmoments und der Drehzahl der Kurbelwelle sind Drehmoment- und Drehzahlsensoren vorgesehen, die Signale an eine elektronische Steuerung abgeben, die die vom Fahrer aufgebrachte Leistung ermittelt und den Elektromotor zur Unterstützung des Fahrers ansteuert.

Zur Übertragung der elektromotorischen Kraft auf die Tretkurbelwelle werden ein- oder mehrstufige Untersetzungsgetriebe, insbesondere ein- oder mehrstufige Stirnrad- oder Planetengetriebe, ein- oder mehrstufige Kettengetriebe, einstufige Harmonic-Drive-Getriebe oder Kombinationen aus den vorstehend genannten Getrieben eingesetzt.

Aus der DE 10 2009 045 447 A1 ist ein Fahrrad mit elektrischem Hilfsantrieb bekannt, das einen Elektromotor, eine mit dem Elektromotor verbundene Batterie zur Speicherung elektrischer Energie, einen Kurbeltrieb mit Tretkurbeln, die an einer um eine Kurbelachse drehbar angeordnete Tretkurbelwelle befestigt sind, und ein Planetengetriebe zum Antrieb des Fahrrads sowohl durch den Elektromotor als auch durch Muskelkraft eines Fahrers aufweist. Das Planetengetriebe und der über eine Hohlwelle mit einem Sonnenrad des Planetengetriebes verbundene Elektromotor sind um die innerhalb der Hohlwelle verlaufende Tretkurbelwelle des Kurbeltriebs angeordnet, der entweder mit einem Planetenträger oder mit dem Hohlrad des Planetengetriebes verbunden ist. Zur Drehmomentoptimierung weist das Fahrrad an einem mit dem Planetengetriebe verbundenen Antriebsrad eine als Ketten- oder Nabenschaltung ausgebildete Gangschaltung auf.

Nachteilig bei der Verwendung ein- oder mehrstufiger Stirnrad- oder Kettengetriebe ist der erforderliche große Bauraum für die Anordnung dieser Getriebearten, der dadurch bedingte erhöhte Materialeinsatz bei den Antriebsgehäuseteilen und der hohe Platzbedarf für die Verbindung der Antriebseinrichtung mit dem Fahrradrahmen. Bei der Anordnung der Antriebseinrichtung im Bereich der Tretkurbelwelle führt dies zu vorstehenden Antriebsgehäuseteilen, die beim Transport des Fahrrads hinderlich sind. Ein weiterer Nachteil beim Einsatz von Stirnrad- oder Kettengetrieben ist die ungünstige Geräuschemission sowie bei Stirnradgetrieben infolge der starren Verbindung des Elektromotors mit der Tretkurbelwelle eine hohe Anfälligkeit gegen Stoßbelastungen, die beispielsweise durch Schaltstöße der Ketten- oder Nabenschaltung des Fahrrads hervorgerufen werden.

Außerhalb eines Antriebsgehäuses geführte Kettenstufen eines ein- oder mehrstufigen Kettengetriebes sind anfällig gegen äußere Einflüsse und erhöhen das Verletzungsrisiko. Der Einsatz eines einstufigen Harmonic-Drive-Getriebes führt zu erhöhten Kosten und einer Verringerung des Wirkungsgrades.

Aus der EP 0 763 462 B1 ist ein Hilfsantrieb für ein Fahrrad bekannt, das einen Rahmen mit einem Tretlager, einem Sitzrohr, einem unteren Rohr, einem Kopfrohr, einem oberen Rohr, einem Paar von Kettenstegen und einem Paar von Sitzstegen umfasst. Das untere Rohr, das Sitzrohr und die Kettenstege schneiden sich in einem Tretlager mit einer Kurbelwelle, deren Enden mit Kurbelarmen verbunden sind. Der Hilfsantrieb umfasst einen Elektromotor, einen Leistungs-Übertragungsriemen und einen mehrere Zahnräder umfassenden Getriebestrang, der endseitig mit der Kurbelwelle gekoppelt ist. Der Hilfsantrieb ist in einem Gehäuse mit einer flachen, länglichen Form mit zwei halbkreisförmigen Enden angeordnet, das ein flaches längliches pfannenförmiges inneres und äußeres Gehäuse aufweist. Das innere Gehäuse erstreckt sich vom Tretlager des Fahrradrahmens entlang des unteren Rohres nach vorn und ist auf einer Seite gegenüber dem unteren Rohr geöffnet. Das äußere Gehäuse ist ebenfalls auf der der Öffnung des inneren Gehäuses gegenüber liegenden Seite geöffnet und weist eine Ausnehmung auf, in die das offene Ende des inneren Gehäuses eingepasst ist. Das innere Gehäuse und das äußere Gehäuse sind gegenseitig durch eine Kombination mehrerer Schrauben miteinander verbunden.

Infolge des aus einem Getriebestrang mit mehreren miteinander kämmenden Zahnrädern gebildeten Untersetzungsgetriebes und der dadurch bedingten länglichen, pfannenförmigen Gehäuseformen ragt das Gehäuse ausgehend vom Tretlager weit über das untere Rohr hinaus, wodurch die Bodenfreiheit im Bereich des Tretlagers erheblich verringert wird, so dass bei einem Transport des Fahrrades über Unebenheiten hinweg die vorspringenden Teile des Gehäuses die Kollisionsgefahr mit Hindernissen wie Treppen, Schwellen und dergleichen erhöhen.

Aus der gattungsgemässen DE 10 2010 009649 A1 (siehe Figuren 1 und 2) ist eine Antriebseinrichtung für ein Elektrorad, insbesondere für ein elektromotorisch und mit Muskelkraft hybrid betriebenes Pedelec, das einen Rahmen mit einem Sattelrohr, einem Unterrohr und unteren Streben eines Hinterbaus des Elektrorades enthält, mit einem Antriebsgehäuse, dass einen Gehäuserahmen, an den ein erster mit dem Sattelrohr verbindbarer Rohrflansch und ein zweiter, mit dem Unterrohr verbindbarer Rohrflansch angeformt sind, und beidseitig mit dem Gehäuserahmen verbundene Gehäusedeckel aufweist, und in dem eine mit einem Kettenrad eines Kettengetriebes des Elektrorades verbundene Hohlwelle, eine koaxial zur Hohlwelle angeordnete und mit der Hohlwelle koppelbare Tretkurbelwelle, die an beiden Enden mit Tretkurbeln verbunden ist, ein Elektromotor mit einer parallel und beabstandet zur Hohlwelle angeordneten Motorwelle und ein mehrstufiges Getriebe mit einem Zugmittelgetriebe, das ein Zugmittelantriebsrad und ein mit der Hohlwelle koppelbares Zugmittelabtriebsrad enthält, die über ein flexibles Zugmittel miteinander verbunden sind, und mit einem Planetengetriebe, dessen Sonnenrad mit der Motorwelle des Elektromotors verbunden ist und mit Planetenrädern in Eingriff steht, die auf einem Planetenradträger gelagert sind und auf der Innenverzahnung eines Hohlrades ablaufen, wobei der Abstand der Hohlwelle von der Motorwelle kleiner ist als die Summe der Radien des Zugmittelabtriebsrades und des feststehenden Hohlrades, bekannt. Die parallele Anordnung der beiden Zwischenwellen und die Getriebeübersetzung mit einem drehbeweglich angeordneten Hohlrad erfordert einen entsprechend großen Bauraum zur Unterbringung der Getriebeübersetzung und des Zugmittelgetriebes, so dass die Motorwelle, die Hohlwelle und die Zwischenwelle in Fahrtrichtung vor der Tretlagerwelle angeordnet sind, wodurch das Gehäuse entsprechend weit in das Unterrohr hineinragt.
Der vorliegenden Erfindung liegt die Aufgabenstellung zugrunde, eine Antriebseinrichtung für ein Elektrorad der eingangs genannten Art zu schaffen, deren Antriebsgehäuse optimal in den Rahmen des Elektrorades integrierbar ist, kompakt mit geringen äußeren Abmessungen ausgebildet ist und bei geringem Gewicht eine gute Zugänglichkeit aufweist und eine tragende Funktion in der Festigkeitsstruktur des Rahmens erfüllt, und deren Funktionselemente einen hohen Wirkungsgrad aufweisen und sich durch eine geringe Geräuschentwicklung bei maximaler Stoßdämpfung des Getriebes auszeichnen.
Diese Aufgabe wird erfindungsgemäß mit den Merkmalen des Anspruchs 1 gelöst.

Die erfindungsgemäße Antriebseinrichtung für ein Elektrorad weist ein Antriebsgehäuse optimal in den Rahmen des Elektrorades integrierbares Antriebsgehäuse auf, das bei geringen äußeren Abmessungen und geringem Gewicht eine gute Zugänglichkeit gewährleistet und eine tragende Funktion in der Festigkeitsstruktur des Rahmens erfüllt, wobei die Funktionselemente der Antriebseinrichtung einen hohen Wirkungsgrad aufweisen und sich durch eine geringe Geräuschentwicklung bei maximaler Stoßdämpfung des Getriebes auszeichnen.

Durch die Verbindung des Elektromotors mit der das Kettengetriebe des Elektrorades antreibenden Hohlwelle über ein Zugmittelgetriebe können die Motorwelle und die Tretkurbelwelle mit der koaxial hierzu angeordneten Hohlwelle getrennt voneinander und in Bezug auf die Längserstreckung des Rahmens des Elektrorades hintereinander angeordnet werden, was eine schmale, längliche Bauform des Antriebsgehäuses ermöglicht. Darüber hinaus ermöglicht das Zugmittelgetriebe bei maximalem Wirkungsgrad eine große Untersetzung bzw. Übersetzung ins Langsame, so dass ein hochdrehender Elektromotor kleiner Baugröße eingesetzt werden kann, wodurch ein minimales Bauvolumen der Antriebseinrichtung erzielt wird.

Diese Integration des Antriebsgehäuses in den Rahmen des Elektrorades bewirkt, dass der Hybridantrieb eine tragende Funktion im Fahrradrahmen übernimmt und das Tretlagergehäuse eines Fahrrads ohne Antriebseinrichtung ersetzen kann, so dass die Rahmengeometrie eines nicht mit einer elektromotorischen Antriebseinrichtung versehenen Fahrrades beibehalten werden kann und unter anderem keine Radstandverlängerung erfordert.

Eine optimale Integration des Antriebsgehäuses des Hybridantriebs in den Fahrradrahmen bedingt unter anderem, dass das Antriebsgehäuse keine signifikant über den normalen Fahrradrahmen hervorspringenden Teile aufweist, die die Bodenfreiheit im Bereich des Tretlagers verringern und die Kollisionsgefahr mit Unebenheiten des Fahrweges erhöhen.

Aus diesem Grunde weist das Antriebsgehäuse einen Gehäuserahmen mit einem umlaufenden Profil auf, an dem Rohrflansche angeformt sind, die mit dem Sattelrohr, dem Unterrohr und den unteren Streben des Hinterbaus des Fahrradrahmens verbunden werden und enthält sowohl den Elektromotor als auch das Untersetzungsgetriebe und die drehrichtungsabhängig schaltenden Kupplungen sowie die Messwertaufnehmer. Trotz minimaler äußerer Abmessungen sowohl bezüglich der Länge als auch bezüglich der Bautiefe, die eine Bauform des Hybridantriebs mit einem minimalen Achsabstand zwischen der Motorwelle und der Hohlwelle sowie eine optimale Verschachtelung der Getriebeteile unter Einbeziehung des Gehäuses des Elektromotors voraussetzen, enthält das Antriebsgehäuse sämtliche Teile des Hybridantriebs und gewährleistet eine hohe Untersetzung.

Vorzugsweise sind die Rohrflansche mit dem Sattelrohr, dem Unterrohr und den unteren Streben des Hinterbaus über Schweiß- oder Lötverbindungen verbunden.

Die den Gehäuserahmen beidseitig abschließenden Gehäusedeckel weisen Öffnungen zum Durchführen der Enden der Tretkurbelwelle auf, so dass die vormontierte Antriebseinrichtung in den mit einem ersten Gehäusedeckel verbundenen Gehäuserahmen eingesetzt und durch den zweiten mit dem Gehäuserahmen verbundenen Gehäusedeckel gekapselt werden kann.

In einer ersten Variante besteht das Zugmittelgetriebe der Antriebseinrichtung aus einem Riemengetriebe mit einem Zahn-, Flach- oder Keilriemen als flexiblem Zugmittel.

Die Ausbildung des Zugmittelgetriebes als Riemengetriebe stellt eine minimale Geräuschentwicklung sowie ein minimales Gewicht der Antriebseinrichtung sicher. In Verbindung mit einem kleinvolumigen, hochdrehenden Elektromotor geringen Gewichts zeichnet sich die erfindungsgemäße Antriebseinrichtung durch ein geringes Gesamtgewicht und geringe äußere Abmessungen aus.

Alternativ kann in einer zweiten Variante als Zugmittelgetriebe ein Kettengetriebe eingesetzt werden, das einstufig mit einer ein- oder zweifachen Rollenkette als flexiblem Zugmittel ausgebildet ist.

Um eine hohe Übersetzung ins Langsame beim Einsatz eines kleinvolumigen, hochdrehenden Elektromotors und damit ein hohes Drehmoment an der mit dem Kettenradantrieb des Elektrofahrrads gekoppelten Hohlwelle zu gewährleisten, bildet das Zugmittelgetriebe eine Getriebestufe eines mehrstufigen Getriebes, wobei das Zugmittelgetriebe wahlweise als erste, zweite oder weitere Getriebestufe des mehrstufigen Getriebes eingesetzt werden kann.

Eine bevorzugte Ausgestaltung des mehrstufigen Getriebes weist als weitere Getriebestufe ein gerad- oder schräg verzahntes Stirnrad- oder Planetengetriebe auf.

In bevorzugter Ausgestaltung besteht die erste Getriebestufe aus einem gerad- oder schräg verzahnten einstufigen Planetengetriebe, das ein feststehendes Hohlrad aufweist, auf dessen Innenverzahnung mit einem Planetenträger verbundene Planetenräder ablaufen, die in Eingriff mit einem mit der Motorwelle des Elektromotors verbundenen Sonnenrad stehen, und dass ein mit dem Planetenträger verbundenes Zugmittelantriebsrad eines als zweite Getriebestufe ausgebildeten Zugmittelgetriebes drehbar auf einer Verlängerung der Motorwelle aufgesteckt ist

Der Einsatz eines Planetengetriebes als eine Getriebestufe des mehrstufigen Getriebes ermöglicht neben einer kompakten Bauweise und damit Beanspruchung eines geringen Bauraums eine variable Auslegung dieser Getriebestufe für kleine und große Drehmomente sowie für große und kleine Antriebsdrehzahlen und eine koaxiale Anordnung des An- und Abtriebsrades, so dass das Abtriebsrad des Planetengetriebes gleichzeitig die Funktion eines Antriebsrades des Zugmittelgetriebes ausübt und für eine kompakte Bauweise koaxial zur Motorwelle des Elektromotors angeordnet werden kann. Dadurch ist die Voraussetzung für eine optimale Anpassung des Antriebsgehäuses an das Fahrraddesign geschaffen.

Vorzugsweise weist das Zugmittelgetriebe das mit dem Planetenträger des Planetengetriebes verbundene Zugmittelantriebsrad, das mit dem Zugmittelantriebsrad in Eingriff stehende Zugmittel und ein mit dem Zugmittel in Eingriff stehendes, über die zweite drehrichtungsabhängig geschaltete Kupplung mit der Hohlwelle koppelbares Zugmittelabtriebsrad auf.

Um einen möglichst großen Umschlingungswinkel des Zugmittels um das Zugmittelantriebsrad und/oder Zugmittelabtriebsrad und damit eine minimale Flächenpressung im Verzahnungseingriff zwischen dem Zugmittel und der Verzahnung des Zugmittelantriebsrades oder Zugmittelabtriebsrades zu gewährleisten, ist zwischen dem Zugmittelantriebsrad und dem Zugmittelabtriebsrad eine das Zugmittel umlenkende Einrichtung vorgesehen.

Die das Zugmittel umlenkende Einrichtung ist vorzugsweise in Richtung einer Vergrößerung des Umschlingungswinkels des Zugmittelantriebsrades und/oder Zugmittelabtriebsrades vorgespannt.

Die Vorspannung der das Zugmittel umlenkenden Einrichtung stellt ein automatisches Nachspannen des flexiblen Zugmittels und damit einen sicheren Verzahnungseingriff zwischen der Verzahnung des Zugmittelantriebsrades, Zugmittelabtriebsrades und flexiblen Zugmittels auch bei einer Längung des flexiblen Zugmittels, insbesondere eines Zahn-, Flach- oder Keilriemens als flexiblem Zugmittel, sicher.

Alternativ kann die das Zugmittel umlenkende Einrichtung fest eingestellt und beispielsweise durch Abstützung in einem Langloch nachgestellt werden.

Das mehrstufige Getriebe kann mit unterschiedlichen Getriebearten und Kombinationen der Getriebearten realisiert werden.

In einer ersten Variante ist in der ersten Getriebestufe ein einstufiges gerad- oder schräg verzahntes Stirnradgetriebe und in der zweiten Stufe ein einstufiges Riemengetriebe mit einem Zahn-, Flach- oder Keilriemen vorgesehen.

In einer zweiten Variante ist in der ersten Getriebestufe ein einstufiges gerad- oder schräg verzahntes Stirnradgetriebe und in der zweiten Stufe ein einstufiges Kettengetriebe mit einer einfachen oder zweifachen Rollenkette vorgesehen.

Eine dritte Variante sieht in der ersten Getriebestufe ein einstufiges gerad- oder schräg verzahntes Planetengetriebe und in der zweiten Stufe ein einstufiges Riemengetriebe mit einem Zahn-, Flach- oder Keilriemen vor.

Bei einer vierten Variante wird ein einstufiges gerad- oder schräg verzahntes Planetengetriebe in der ersten Getriebestufe mit einem einstufigen Kettengetriebe mit einer einfachen oder zweifachen Rollenkette kombiniert.

Anhand von in der Zeichnung dargestellten Ausführungsbeispielen soll der der Erfindung zugrundeliegende Gedanke näher erläutert werden. Es zeigen:
- Fig. 1 bis 4: eine teilweise geschnittene, perspektivische Darstellung einer Antriebseinrichtung mit einem zweistufigen, ein Planeten- und Zugmittelgetriebe enthaltenden Getriebe aus unterschiedlichen Ansichten;
- Fig. 5: einen Längsschnitt durch die Antriebseinrichtung gemäß den Fig. 1 bis 4;
- Fig. 6 und 7: eine perspektivische Darstellung des Zugmittelantriebsrades, Planetenträgers und der Planetenräder des Planetengetriebes aus unterschiedlichen Blickrichtungen;
- Fig.8: eine schematische Funktionsdarstellung des Planetengetriebes gemäß den Fig. 1 bis 7;
- Fig. 9: eine schematische Darstellung eines zweistufigen Getriebes mit einem einstufigen Zugmittelgetriebe in der ersten Getriebestufe und einem Planetengetriebe in der zweiten Getriebestufe und
- Fig. 10: eine schematische Darstellung der Integration des Antriebsgehäuses in die Rahmengeometrie des Elektrorades.

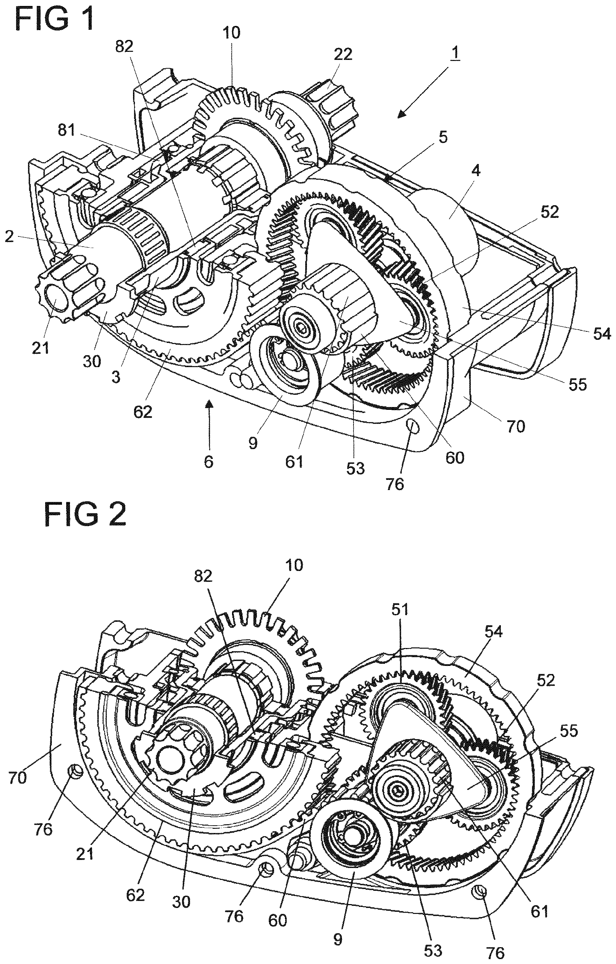

Die in den Fig. 1 bis 5 dreidimensional in unterschiedlichen Ansichten und bei teilweise geschnittenem Antriebsgehäuse 7 sowie in einem Längsschnitt dargestellte, elektromotorisch und mit Muskelkraft hybrid angetriebene Antriebseinrichtung 1 mit Freilauf- oder Rücktrittfunktion wird mit dem Rahmen eines Elektrorades, insbesondere eines Pedelecs oder E-Bikes verbunden bzw. in den Rahmen des Pedelecs oder E-Bikes integriert.

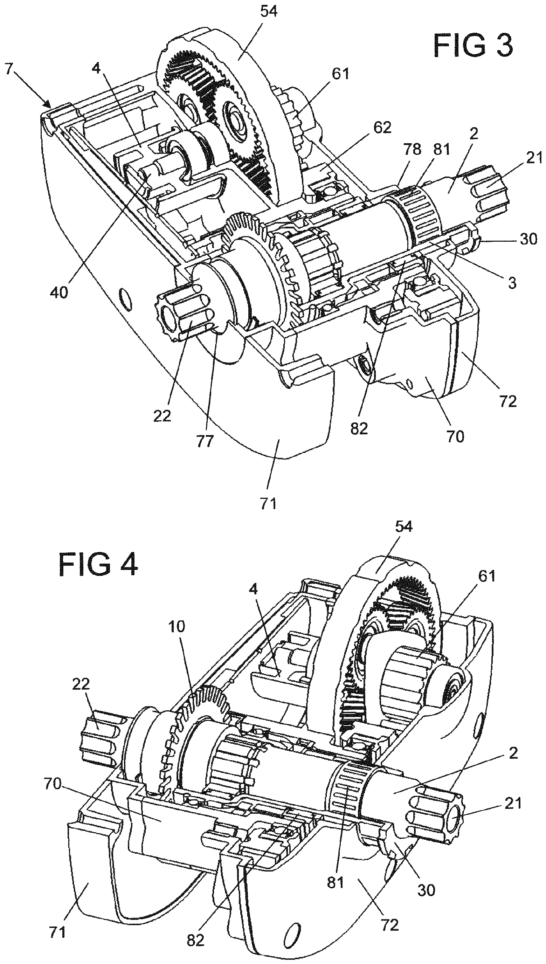

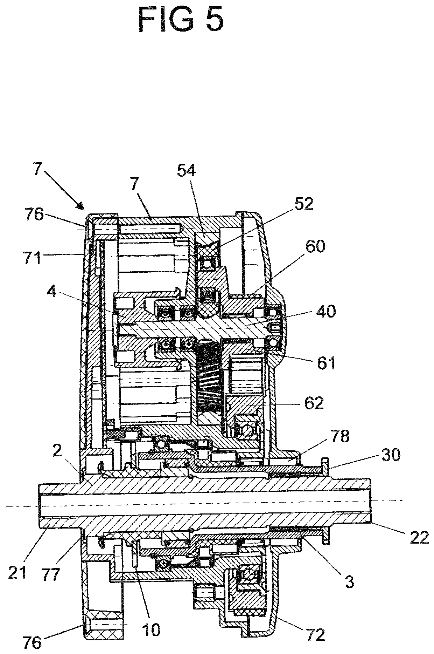

Das Antriebsgehäuse 7 setzt sich aus einem in den Rahmen des Elektrorades integrierten Gehäuserahmen 70 und beidseitig mit dem Gehäuserahmen 70 verbundenen Gehäusedeckeln 71, 72 zusammen. Der Gehäuserahmen 70 weist gemäß den Fig. 1 und 2 ein umlaufendes Profil mit mehreren Gewindebohrungen 76 auf, in die Schrauben zur Befestigung der Gehäusedeckel 71, 72 einschraubbar sind. In den Fig. 3 und 4 ist das hälftig aufgeschnittene Antriebsgehäuse 7 in perspektivischer Ansicht und in Fig. 5 das Antriebsgehäuse in einem Längsschnitt mit vollständig darin angeordneter Antriebsvorrichtung dargestellt.

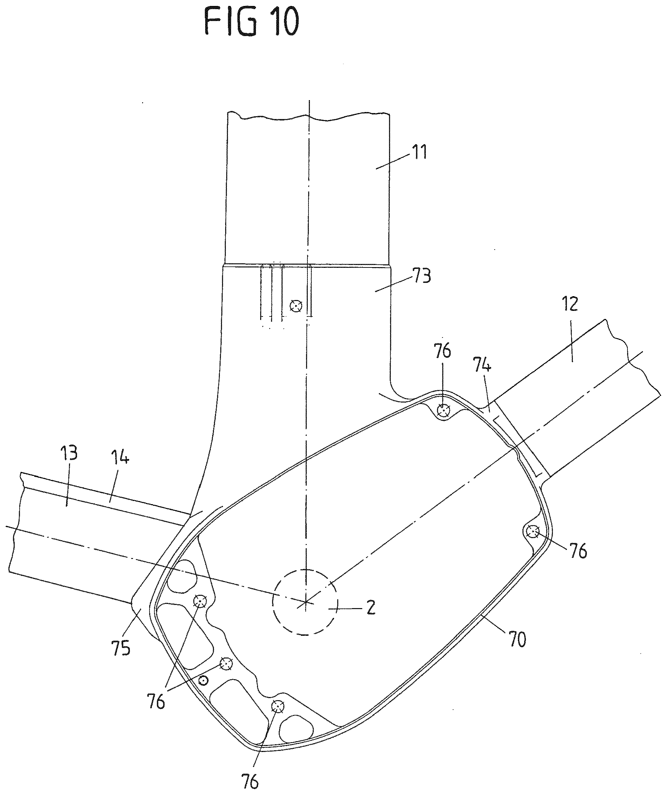

An den Gehäuserahmen 70 sind gemäß Fig. 10 Rohrflansche 73, 74, 75 vorzugsweise einstückig angeformt, von denen ein erster Rohrflansch 73 mit einem die Sattelstütze und abschließend den Fahrradsattel tragenden Sattelrohr 11, ein zweiter Rohrflansch 74 mit dem Unterrohr 12 und ein dritter Rohrflansch 75 mit den unteren Streben 13, 14 des Hinterbaus des Rahmens des Elektrorades vorzugsweise durch Schweißen oder Löten verbunden ist.

An den in den Rahmen des Elektrorades integrierten Gehäuserahmen 70 wird einer der beiden Gehäusedeckel 71 oder 72 montiert und anschließend die vormontierte Antriebseinrichtung 1 von der gegenüberliegenden Seite in den Gehäuserahmen 70 eingesetzt, wobei das eine Ende einer Tretkurbelwelle 2 durch eine Öffnung 77, 78 des mit dem Gehäuserahmen 70 verbundenen Gehäusedeckels 71 oder 72 gesteckt wird. Anschließend wird die Öffnung 77, 78 des zweiten Gehäusedeckels 71 oder 72 auf das andere Ende der Tretkurbelwelle 2 aufgesteckt und dieser Gehäusedeckel 71 oder 72 am Gehäuserahmen 70 mittels in die Gewindebohrungen 76 eingeschraubter Schrauben befestigt.

Der Gehäuserahmen 70 übernimmt als Einschweißteil gemäß Fig. 10 eine tragende Funktion im Gesamtrahmen des Elektrorades und ersetzt das Tretlagergehäuse eines Fahrrads ohne elektromotorischer Antriebseinrichtung, so dass der Gehäuserahmen 70 sicherstellt, dass die Rahmengeometrie eines nicht mit einer Antriebseinrichtung 1 versehenen Fahrrades beibehalten wird, d. h., es ist unter anderem keine Radstandverlängerung erforderlich, da sich die Mittelachsen des Sattelrohres 11, des Unterrohrs 12 und der unteren Streben oder Kettenstreben 13, 14 des Hinterbaus des Elektrorades in der Tretkurbelwelle 2 schneiden, wie dies durch gestrichelte Linien in Fig. 10 angedeutet ist.

Die Antriebseinrichtung 1 umfasst gemäß den Fig. 1 bis 5 eine Tretkurbelwelle 2, deren Kurbelzapfen 21, 22 mit nicht näher dargestellten Tretkurbeln verbunden werden, an deren Enden mit Muskelkraft zu betätigende Pedale vorgesehen sind, die über den Hebelarm der Tretkurbeln ein durch Muskelkraft bewirktes Drehmoment auf die Tretkurbelwelle 2 übertragen.

Die Tretkurbelwelle 2 ist über eine als Klemmkörperfreilauf ausgebildete erste drehrichtungsabhängig geschaltete Kupplung 81 mit einer koaxial zur Tretkurbelwelle 2 angeordneten und drehbar im Antriebsgehäuse 7 gelagerten Hohlwelle 3 verbunden, an deren einem Ende ein Kettenradflansch 30 angeordnet ist, der mit einem Kettenrad verbunden wird, das die Antriebskraft bzw. das Antriebs-Drehmoment über eine Kette auf ein mit dem Hinterrad des Elektrorades verbundenes Kettenritzel bzw. eine Ketten- oder Nabenschaltung überträgt.

Die elektromotorische Kraft wird von einem Elektromotor 4 erzeugt, der von einer Steuerelektronik angesteuert und mit elektrischer Energie aus einem nicht näher dargestellten Akkumulator versorgt wird, der in den Rahmen des Elektrorades integriert oder beispielsweise mit dem Gepäckträger des Elektrorades verbunden ist.

Das von der Motorwelle 40 des Elektromotors 4 abgegebene Drehmoment wird über ein zweistufiges Getriebe 5, 6 und eine als Klemmkörperfreilauf ausgebildete zweite drehrichtungsabhängig geschaltete Kupplung 82 auf die Hohlwelle 3 übertragen. Das zweistufige Getriebe 5, 6 bewirkt eine Übersetzung der Drehzahl des Elektromotors 4 ins Langsame, so dass ein schnell laufender Elektromotor 4 geringer Baugröße zur Minimierung sowohl des Gewichts als auch der Baugröße der Antriebseinrichtung 1 eingesetzt werden kann.

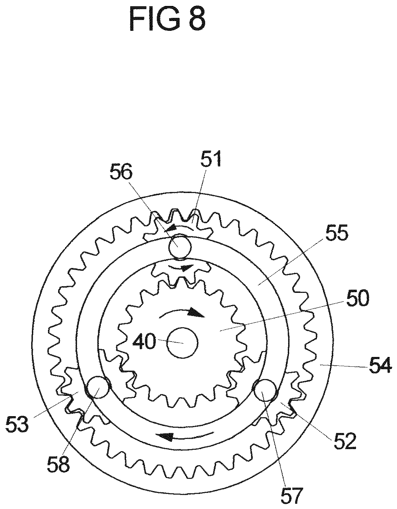

Das zweistufige Getriebe 5, 6 weist in der ersten Getriebestufe ein Planetengetriebe 5 und in der zweiten Getriebestufe ein Zugmittelgetriebe 6 auf. Wie insbesondere der schematischen Darstellung gemäß Fig. 8 zu entnehmen ist, enthält das Planetengetriebe 5 ein mit der Motorwelle 40 des Elektromotors 4 verbundenes, vorzugsweise schräg verzahntes Sonnenrad 50, drei um 120 ° zueinander versetzt drehbar an einem Planetenradträger 55 angeordnete und mit dem Sonnenrad 50 in Verzahnungseingriff stehende, schräg verzahnte Planetenräder 51, 52, 53 und ein feststehendes Hohlrad 54, mit dessen schräg verzahnter Innenverzahnung die schräg verzahnten Außenverzahnungen der Planetenräder 51, 52, 53 kämmen. Die Planetenräder 51, 52, 53 sind auf Achsen 56, 57, 58 des Planetenradträgers 55 drehbar gelagert.

Der Planetenradträger 55 ist mit einem Zugmittelantriebsrad 61 des die zweite Getriebestufe bildenden Zugmittelgetriebes 6 verbunden. In einer Bohrung des Zugmittelantriebsrades 61 ist die Motorwelle 40 des Elektromotors 4 drehbar gelagert.

Das Zugmittelgetriebe 6 enthält das mit dem Planetenradträger 55 fest verbundene Zugmittelantriebsrad 61 und ein mit einer Außenverzahnung versehenes Zugmittelabtriebsrad 62, das über die zweite drehrichtungsabhängig geschaltete Kupplung 82 mit der Hohlwelle 3 koppelbar ist. Mit den Außenverzahnungen des Zugmittelantriebsrades 61 und Zugmittelabtriebsrades 62 steht ein flexibles Zugmittel 60 in Eingriff. Da das Zugmittelgetriebe 6 eine Untersetzung der Drehzahl des Elektromotors 4 bewirken soll, weist das Zugmittelantriebsrad 61 einen geringeren Durchmesser bzw. eine geringere Zähnezahl auf als das Zugmittelabtriebsrad 62. Das flexible Zugmittel 60 ist über eine zwischen der Achse des Zugmittelantriebsrades 61 und der Achse des Zugmittelabtriebsrades 62 angeordnete Umlenkrolle 9 gelegt, die derart zwischen dem Zugmittelantriebsrad 61 und dem Zugmittelabtriebsrad 62 angeordnet ist, dass der Umschlingungswinkel des flexiblen Zugmittels 60 um das Zugmittelantriebsrad 61 und Zugmittelabtriebsrad 62 vergrößert wird.

Die Umlenkrolle 9 kann wahlweise fest eingestellt oder in Richtung einer Vergrößerung des Umschlingungswinkels angefedert sein. Bei fester Einstellung der Umlenkrolle 9 ist die Achse der Umlenkrolle 9 vorzugsweise in einem Langloch gelagert, so dass bei entsprechender Ausrichtung des Langloches ein Nachstellen der Umlenkrolle 9 zur Vergrö-βerung des Umschlingungswinkels möglich ist. Durch Anfedern der Umlenkrolle 9 wird das flexible Zugmittel 60 bei im Betrieb auftretender Längung des flexiblen Zugmittels 60 automatisch nachgestellt und damit die Spannung des flexiblen Zugmittels 60 erhalten und bei sich vergrößerndem Umschlingungswinkel eine definierte Anlage der Verzahnung des flexiblen Zugmittels 60 an den Außenverzahnungen des Zugmittelantriebsrades 61 und Zugmittelabtriebsrades 62 gewährleistet.

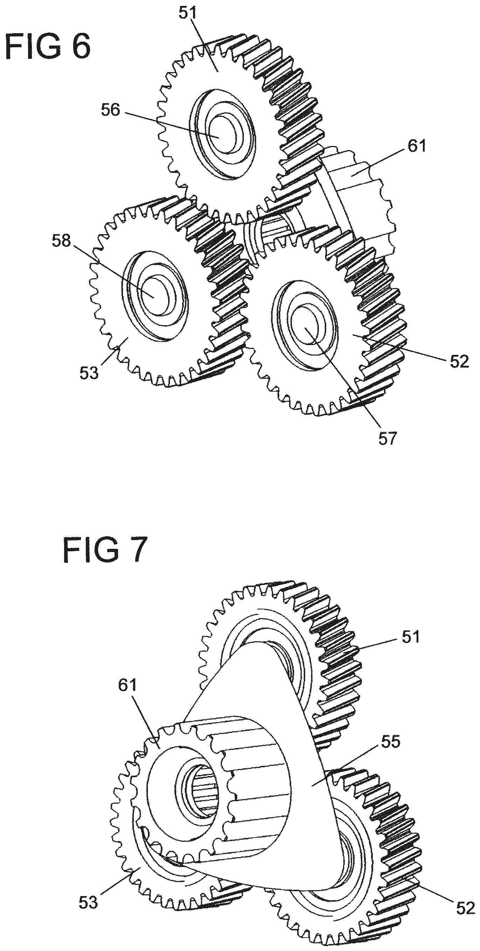

Als Zugmittelgetriebe 6 kann ein einstufiges Riemengetriebe mit einem Zahn-, Flach- oder Keilriemen oder ein einstufiges Kettengetriebe mit einer ein- oder zweifachen Rollenkette eingesetzt werden.
Das in Fig. 8 schematischen dargestellte Planetengetriebe 5 besteht aus dem mittig angeordneten und mit der Motorwelle 40 verbundenen Sonnenrad 50, dem Hohlrad 54, den drei um 120 ° versetzten Planetenrädern 51, 52, 53 und dem Planetenradträger 55. Die gemäß den Fig. 6 und 7 auf Achsen 56, 57, 58 des Planetenradträgers 55 drehbar gelagerten Planetenräder 51, 52, 53 kämmen mit ihrer gerad- oder schräg verzahnten Außenverzahnung sowohl mit der Außenverzahnung des Sonnenrades 50 als auch mit der Innenverzahnung des Hohlrades 54. Bei einem Antrieb des Sonnenrades 50 im Uhrzeigersinn entsprechend dem in das Sonnenrad 50 eingetragenen Pfeil drehen sich die Planetenräder 51, 52, 53 entgegen dem Uhrzeigersinn und der Planetenradträger 55 wiederum im Uhrzeigersinn.
Wird das Planetengetriebe 5 als erste Getriebestufe des mehrstufigen Getriebes 5, 6 eingesetzt, so wird das mit der Motorwelle 40 verbundene Sonnenrad 50 mit einer Drehzahl n₁ angetrieben, während der Abtrieb über den Planetenradträger 55 mit einer Drehzahl n₂ erfolgt, wobei die Drehzahl n₂ der Drehzahl des mit dem Planetenradträger 55 fest verbundenen Zugmittelantriebsrades 61 der als Zugmittelgetriebe 6 ausgebildeten zweiten Getriebestufe des mehrstufigen Getriebes 5, 6 entspricht. In dieser Ausführungsform ist das Hohlrad 54 feststehend ausgebildet und mit dem Antriebsgehäuse 7 verbunden. Mit dieser Anordnung des Planetengetriebes 5 sind Übersetzungen ins Langsame bis i = n₁/n₂ = 10 möglich.

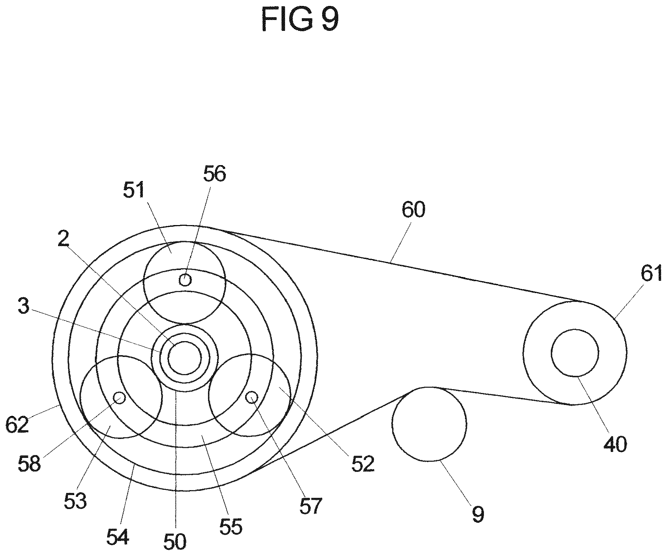

Fig. 9 zeigt eine schematische Darstellung einer nicht beanspruchten alternativen Ausführungsform des zweistufigen Getriebes mit einer Umkehrung der Getriebearten.
Während in der Ausführungsform gemäß den Fig. 1 bis 5 die erste Getriebestufe aus einem Planetengetriebe 5 besteht, dessen Sonnenrad 50 mit der Motorwelle 40 des Elektromotors 4 verbunden ist und dessen Planetenradträger 55 die zweite, aus dem Zugmittelgetriebe 6 bestehende Getriebestufe antreibt, ist bei der in Fig. 9 dargestellten Ausführungsform die erste Getriebestufe als Zugmittelgetriebe 6 ausgebildet, das die zweite, aus einem Planetengetriebe 5 bestehende Getriebestufe antreibt.

Das Zugmittelgetriebe 6 weist ein mit der Motorwelle 40 verbundenes Zugmittelantriebsrad 61 kleinen Durchmessers bzw. kleiner Zähnezahl und ein koaxial zur Tretkurbelwelle 2 bzw. Hohlwelle 3 angeordnetes Zugmittelabtriebsrad 62 großen Durchmessers bzw. großer Zähnezahl 62 auf, das mit dem Zugmittelantriebsrad 61 über ein flexibles Zugmittel 60 verbunden ist, das bei einem als einstufiges Riemengetriebe ausgebildeten Zugmittelgetriebe 6 aus einem Zahn-, Flach- oder Keilriemen und bei einem als einstufiges Kettengetriebe ausgebildeten Zugmittelgetriebe 6 aus einer ein- oder zweifachen Rollenkette besteht.

Das Zugmittelabtriebsrad 62 ist mit einem Sonnenrad 50 der als Planetengetriebe 5 ausgebildeten zweiten Getriebestufe fest verbunden, was analog zu dem in den Fig. 1 bis 8 dargestellten Ausführungsbeispiel des Planetengetriebes 5 mit drei um 120° zueinander versetzt angeordneten Planetenrädern 51, 52, 53 kämmt. Die Planetenräder 51, 52, 53 sind drehbar auf einem Planetenradträger 55 angeordnet und kämmen mit der Innenverzahnung eines gehäusefesten Hohlrades 54. Der Planetenradträger 55 ist über die zweite drehrichtungsabhängig schaltende Kupplung 82 mit der Hohlwelle 3 koppelbar.

Für eine weitere Übersetzung ins Langsame kann der Planetenradträger 55 mit dem Sonnenrad eines nachgeordneten, eine dritte Getriebestufe des mehrstufigen Getriebes bildenden Planetengetriebes verbunden werden, das in gleicher Weise ausgebildet ist wie das vorstehende beschriebene Planetengetriebe 5. Der Planetenradträger dieses Getriebes ist dann über die zweite drehrichtungsabhängig schaltende Kupplung 82 mit der Hohlwelle 3 koppelbar, die elektromotorisch über das mehrstufige Getriebe angetrieben wird, wenn beispielsweise die Geschwindigkeit des Elektrorades kleiner oder gleich 6 km/h ist oder eine Zuschaltung des Elektroantriebs zum Tretkurbelantrieb gewünscht ist und ein entsprechendes Drehmoment von der Tretkurbelwelle 2 auf die Hohlwelle 3 ausgeübt wird.

Eine weitere Alternative kann darin bestehen, dass eine dritte Getriebestufe des mehrstufigen Getriebes wiederum als Zugmittelgetriebe ausgebildet ist, dessen Zugmittelantriebsrad mit dem Planetenradträger des Planetengetriebes verbunden ist und das über ein Zugmittel ein Zugmittelabtriebsrad antreibt, dessen Achse koaxial zur Hohlwelle bzw. Tretkurbelwelle angeordnet ist, die beispielsweise zwischen der Motorachse 40 und der Achse des Planetengetriebes 5 vorgesehen ist.

Nachstehend soll die Funktion der in den Fig. 1 bis 5 dargestellten Antriebseinrichtung 1 näher erläutert werden.

Da die Drehrichtung des aus dem Elektromotor 4 und dem zweistufigen Getriebe 5, 6 bestehenden elektromotorischen Antriebs stets der Vorwärtsfahrtrichtung des Elektrorades entspricht, kommt es bei der Einleitung eines elektromotorisch erzeugten Drehmoments in die Hohlwelle 3 auf die Drehzahldifferenz zwischen der Drehzahl des elektromotorischen Antriebs, der Hohlwelle 3 und der Tretkurbelwelle 2 an. Ist die Drehzahl des Abtriebszahnrades 52 des elektromotorischen Antriebs größer als die Drehzahl der Hohlwelle 3, so koppelt die zweite drehrichtungsabhängig geschaltete Kupplung 82 den elektromotorischen Antrieb fest mit der Hohlwelle 3 durch Sperren der Klemmrollen der als Klemmkörperfreilauf ausgebildeten zweiten drehrichtungsabhängig geschalteten Kupplung 82, so dass das fest mit der Hohlwelle 3 verbundene Kettenrad das elektromotorische Drehmoment auf das Kettengetriebe überträgt.

Befindet sich die Tretkurbelwelle 2 bei fehlender Betätigung mittels Muskelkraft im Stillstand oder weist die Tretkurbelwelle 2 bei nur geringer Betätigung mittels Muskelkraft eine geringere Drehzahl auf als die Hohlwelle 3, so entkoppelt die erste drehrichtungsabhängig geschaltete Kupplung 81 die Hohlwelle 3 von der Tretkurbelwelle 2, so dass kein Drehmoment vom elektromotorischen Antrieb auf die Tretkurbelwelle 2 übertragen wird und damit keine Kräfte an den mit den Tretkurbeln verbundenen Pedalen auftreten. Diese Freilauffunktion kann direkt zum elektromotorisch angetriebenen Fahren im E-Bike-Betrieb oder als Schiebe- bzw. Anfahrhilfe für ein Pedelec bis 6 km/h benutzt werden. Wird die erfindungsgemäße Antriebseinrichtung für ein Pedelec eingesetzt, so wird beim rein elektromotorischen Fahren mit größerer Geschwindigkeit als der zugelassenen Schiebe- oder Anfahrgeschwindigkeit von 6 km/h oder beim Überschreiten einer vorgegebenen Zeitspanne der Elektromotor 4 von der Steuerelektronik abgeschaltet.

Bei Verwendung der Antriebseinrichtung 1 für ein Pedelec ist es erforderlich, die für ein Vorwärtsfahren des Pedelecs aufgebrachte Leistung in einen elektromotorisch erzeugten und über die zweite drehrichtungsabhängig geschaltete Kupplung 82 auf die Hohlwelle 3 übertragenen Leistungsanteil und einen durch Muskelkraft erzeugten und von der Tretkurbelwelle 2 über die erste drehrichtungsabhängig geschaltete Kupplung 81 auf die Hohlwelle 3 übertragenen Leistungsanteil aufzuteilen. Dabei bestimmt die Drehzahl der Tretkurbelwelle 2 die Drehzahl der Hohlwelle 3 und damit des Kettenrades für den Kettenantrieb am Hinterrad und wird durch die Muskelkraft des Fahrers vorgegeben.

Das von der Tretkurbelwelle 2 abgegebene Drehmoment resultiert aus der Summe der beiden über die Tretkurbeln erzeugten Teildrehmomente und wird auf die Hohlwelle 3 in dem Bereich zwischen der ersten und zweiten drehrichtungsabhängig geschalteten Kupplung 81, 82 auf die Hohlwelle 3 übertragen. Daher kann durch die Anordnung eines Drehmomentsensors zwischen den beiden drehrichtungsabhängig geschalteten Kupplungen 81, 82 am äußeren Umfang der Hohlwelle 3 das von der Tretkurbelwelle 2 abgegebene Drehmoment ermittelt werden. Zur Erfassung der Drehzahl und Drehrichtung der Tretkurbelwelle 2 ist ein Sensor vorgesehen, der eine mit der Tretkurbelwelle 2 verbundene Zahnscheibe 10 zur Beeinflussung des magnetischen Widerstands und einen Hallsensor aufweist, der bei Drehung der Zahnscheibe 10 Sensorsignale an die Steuerelektronik des Hybridantriebs abgibt.

Aus den sensorisch erfassten Drehmoment- und Drehzahlwerten wird über die Steuerelektronik die durch den Fahrer durch Muskelkraft aufgebrachte Leistung ermittelt und über die Steuerelektronik die vom Elektromotor 4 abzugebende elektromotorische Leistung zur Unterstützung des Fahrers gesteuert. Über ein Bedienteil kann der Grad der Leistungsaufteilung zwischen der vom Fahrer durch Muskelkraft erzeugten Leistung und der Leistung des elektromotorischen Antriebs, das heißt der Unterstützungsgrad bzw. Prozentsatz der vom Elektromotor 4 hinzu zu gebenden Leistung eingestellt und gesteuert werden.

Bei einem reinen Fahrradbetrieb wird über die Tretkurbeln ein Drehmoment auf die Tretkurbelwelle 2 übertragen, die aufgrund der in Vorwärts-Fahrtrichtung gerichteten Drehbewegung über die erste drehrichtungsabhängig geschaltete Kupplung 81 drehfest mit der Hohlwelle 3 verbunden wird, so dass das von der Tretkurbelwelle 2 abgegebene Drehmoment auf das Kettenrad und damit auf das Kettengetriebe des Elektrorades übertragen wird.

Wird vom Fahrer keine Kraft auf die Pedale ausgeübt, und dadurch über die Tretkurbeln kein Drehmoment in der Tretkurbelwelle 2 erzeugt, so wird der üblicherweise mit dem Kettenritzel des Hinterrades verbundene Freilauf wirksam, so dass keine Drehbewegung über das Kettengetriebe auf das Kettenrad übertragen wird.

Beim Fahren mit elektromotorischer Unterstützung wird zusätzlich zu dem von der Tretkurbelwelle 2 über die erste drehrichtungsabhängig geschaltete Kupplung 81 abgegebenen Drehmoment ein vom elektromotorischen Antrieb erzeugtes Drehmoment vom Zugmittelabtriebsrad 62 über die zweite drehrichtungsabhängig geschaltete Kupplung 82 auf die Hohlwelle 3 übertragen, so dass an dem mit dem Kettenradflansch 30 der Hohlwelle 3 fest verbundenen Kettenrad die Summe beider Drehmomente für die Vorwärtsfahrt des Elektrorades zur Verfügung steht.

Bei einem reinen elektromotorischen Antrieb wird ein Drehmoment vom Zugmittelabtriebsrad 62 über die zweite drehrichtungsabhängig geschaltete Kupplung 82 auf die Hohlwelle 3 und damit auf das mit der Hohlwelle 3 verbundene Kettenblatt übertragen. Dabei kann sich die Tretkurbelwelle 2 im Stillstand befinden, so dass die Wirkrichtung eines Freilaufes entgegengesetzt zu dem vorstehend für den Fahrradbetrieb beschriebenen Freilauf verläuft.

Für die Erfassung der zulässigen Maximalgeschwindigkeit von 6 km/h für den ausschließlich elektromotorischen Betrieb eines Pedelecs als Schiebe- oder Anfahrhilfe bzw. der maximalen Geschwindigkeit von 25 km/h für den gesetzlich zulässigen elektromotorisch unterstützten Hybridbetrieb eines Pedelecs sind Sensoren erforderlich, die Sensorsignale an die verarbeitende Steuerelektronik abgeben. Zu diesem Zweck wird neben der vorstehend beschriebenen sensorischen Erfassung der Drehzahl und des Drehmoments der Tretkurbelwelle 2 die Bewegungsgeschwindigkeit des Pedelecs erfasst und für den Pedelec-Betrieb verarbeitet.

Beim Fahren mit größerer Geschwindigkeit als der zugelassenen Anfahrgeschwindigkeit von maximal 6 km/h oder bei einer Zeitüberschreitung wird der Elektromotor 4 über die Steuerelektronik abgeschaltet. Ohne die Beschränkung durch die Steuerelektronik wäre somit durch die erfindungsgemäße Antriebseinrichtung auch ein rein elektrischer Fahrbetrieb des Elektrorades oder eBike-Betrieb realisierbar.

Die vorstehend beschriebene Antriebseinrichtung für ein Pedelec mit Freilaufbetrieb kann zusätzlich bzw. alternativ mit einer Einrichtung zur Betätigung einer Rücktrittbremse ausgerüstet werden. Dabei wirken die Bauelemente zur Betätigung der Rücktrittbremse so, dass die fest mit dem Kettenrad verbundene Hohlwelle 3 entgegen der Drehrichtung für einen Vorwärtsfahrbetrieb des Elektrorades gedreht werden kann.

Zu diesem Zweck muss die diese Drehrichtung der Hohlwelle 3 verhindernde erste drehrichtungsabhängig geschaltete Kupplung 81 für die Zeit der Betätigung der Rücktrittbremse überbrückt werden, damit ein Drehmoment von der Tretkurbelwelle 2, die über die Tretkurbeln mit den durch Muskelkraft betätigten Pedalen des Pedelecs verbunden ist, in entgegen gesetzter Richtung zur Hohlwelle 3 übertragen werden kann. Während der Betätigung der Rücktrittbremse ist der elektromotorische Antrieb durch die zweite drehrichtungsabhängige Kupplung 82 für diese Drehrichtung so mit der Hohlwelle 3 verbunden, dass kein Drehmoment von der Hohlwelle 3 zum elektromotorischen Antrieb übertragen wird. Gleichzeitig wird bei einer Betätigung der Rücktrittbremse der Elektromotor 4 abgeschaltet, da er ansonsten gegen die Betätigungsdrehrichtung der Rücktrittbremse ein Drehmoment erzeugen würde.

Die Abschaltung des Motorbetriebs erfolgt durch die den Elektromotor 4 ansteuernde Steuerelektronik im Zusammenhang mit der sensorischen Erfassung der Drehzahl und Drehrichtung der mit den Tretkurbeln verbundenen Tretkurbelwelle 2, unabhängig von der Drehzahl der mit dem Kettenrad fest verbundenen Hohlwelle 3, indem die Steuerelektronik bei Richtungsumkehr des für den Vorwärtsfahrbetrieb des Pedelecs sensorisch erfassten Drehmomentes auf der Hohlwelle 3 den Elektromotor 4 abschaltet und damit sicherstellt, dass bei Betätigung der Rücktrittbremse kein elektromotorischer Eingriff in den Betrieb erfolgt.

Die vorstehend beschriebene Antriebseinrichtung 1 kann infolge ihrer schmalen Bauform optimal in den Rahmen eines Elektrorades integriert werden. Das zumindest zweistufige Getriebe ermöglicht bei maximalem Wirkungsgrad eine große Untersetzung bzw. Übersetzung ins Langsame, so dass ein hochdrehender Elektromotor kleiner Baugröße eingesetzt werden kann, wodurch ein minimales Bauvolumen der Antriebseinrichtung 1 erzielt wird. Dabei unterstützt der Einsatz eines Zugmittelgetriebes in das mehrstufige Getriebe die schlanke Bauform der Antriebseinrichtung 1 und gewährleistet eine geringe Geräuschentwicklung bei maximaler Stoßdämpfung des Getriebes.

Fig. 10 zeigt eine Integration des Antriebsgehäuses 7 in die Rahmengeometrie des Elektrorades und verdeutlicht, wie das Zugmittelgetriebe eine schmale, längliche Bauform der Antriebseinrichtung 1 unabhängig vom Abstand zwischen der Tretkurbelachse 2 bzw. Hohlwelle 3 und der Motorwelle 40 und eine optimale Anpassung an das Fahrraddesign ermöglicht.

Die große Bodenfreiheit im Bereich des Tretlagers verhindert zudem, dass bei einem Transport des Elektrorades über Unebenheiten hinweg keine signifikant vorspringenden Teile des Antriebsgehäuses 7 die Kollisionsgefahr mit Hindernissen wie Treppen, Schwellen und dergleichen erhöhen.

Das durch den Einsatz des Zugmittelgetriebes realisierte sehr schlanke Design der Antriebseinrichtung 1 und damit des Antriebsgehäuses 7 gewährleistet eine große Bodenfreiheit im Bereich der Tretkurbelwelle 2 und damit des Tretlagers und der Breite des Aufbaus, so dass bedarfsweise auch Mehrfach-Kettenblätter an der Tretkurbelwelle 2 befestigt werden können, um eine Vielzahl von Schaltgängen einer Ketten- oder Nabenschaltung zu ermöglichen. Die Integration des Antriebsgehäuses 7 in den Rahmen des Elektrorades schafft zudem eine Gewichtsoptimierung, so dass das Gesamtgewicht des Elektrorades nur unwesentlich größer ist als das eines Fahrrades ohne Hybridantrieb.

### Bezugszeichenliste

- 1: Antriebseinrichtung
- 2: Tretkurbelwelle
- 3: Hohlwelle
- 4: Elektromotor
- 5: Planetengetriebe
- 6: Zugmittelgetriebe
- 7: Antriebsgehäuse
- 9: Umlenkrolle
- 10: Zahnscheibe
- 11: Sattelrohr
- 12: Unterrohr
- 13, 14: untere Streben (Kettenstreben) des Hinterbaus
- 21, 22: Kurbelzapfen
- 30: Kettenradflansch
- 40: Motorwelle
- 50: Sonnenrad
- 51 - 53: Planetenräder
- 54: feststehendes Hohlrad
- 55: Planetenradträger
- 56 - 58: Achsen
- 60: flexibles Zugmittel
- 61: Zugmittelantriebsrad
- 62: Zugmittelabtriebsrad
- 70: Gehäuserahmen
- 71,72: Gehäusedeckel
- 73 - 75: Rohrflansche
- 76: Gewindebohrungen
- 77,78: Öffnungen
- 81: erste drehrichtungsabhängig geschaltete Kupplung
- 82: zweite drehrichtungsabhängig geschaltete Kupplung

## Patentansprüche

1. Antriebseinrichtung (1) für ein Elektrorad, insbesondere für ein elektromotorisch und mit Muskelkraft hybrid betriebenes Pedelec, das einen Rahmen mit einem Sattelrohr (11), einem Unterrohr (12) und unteren Streben (13, 14) eines Hinterbaus des Elektrorades enthält, mit einem Antriebsgehäuse (7), das
- einen Gehäuserahmen (70), an den ein erster mit dem Sattelrohr (11) verbindbarer Rohrflansch (73), ein zweiter, mit dem Unterrohr (12) verbindbarer Rohrflansch (74) und ein dritter, mit den unteren Streben (13, 14) des Hinterbaus des Rahmens des Elektrorades verbindbarer Rohrflansch (75) angeformt sind, und beidseitig mit dem Gehäuserahmen (70) verbundene Gehäusedeckel (71, 72) aufweist, und in dem
- eine mit einem Kettenrad eines Kettengetriebes des Elektrorades verbundene Hohlwelle (3),
- eine koaxial zur Hohlwelle (3) angeordnete und mit der Hohlwelle (3) koppelbare Tretkurbelwelle (2), die an beiden Enden mit Tretkurbeln verbunden ist,
- ein Elektromotor (4) mit einer parallel und beabstandet zur Hohlwelle (3) angeordneten Motorwelle (40) und
- ein mehrstufiges Getriebe (5, 6) mit
- einem Zugmittelgetriebe, das ein Zugmittelantriebsrad (61) und ein mit der Hohlwelle (3) koppelbares Zugmittelabtriebsrad (62) enthält, die über ein flexibles Zugmittel (60) miteinander verbunden sind, und mit
- einem Planetengetriebe (5), dessen Sonnenrad (50) mit der Motorwelle (40) des Elektromotors (4) verbunden ist und mit Planetenrädern (51 - 53) in Eingriff steht, die auf einem mit dem Zugmittelantriebsrad (61) verbundenen Planetenradträger (55) gelagert sind und auf der Innenverzahnung eines feststehenden Hohlrades (54) ablaufen,
angeordnet sind,
wobei der Abstand der Hohlwelle (3) von der Motorwelle (40) kleiner ist als die Summe der Radien des Zugmittelabtriebsrades (62) und des feststehenden Hohlrades (54).

2. Antriebseinrichtung nach Anspruch 1, **dadurch gekennzeichnet, dass** die Rohrflansche (73 - 75) mit dem Sattelrohr (11), dem Unterrohr (12) und den unteren Streben (13, 14) des Hinterbaus mittels Schweißens oder Lötens verbunden sind.

3. Antriebseinrichtung nach Anspruch 1 oder 2, **dadurch gekennzeichnet, dass** die Gehäusedeckel (71, 72) Öffnungen (77, 78) zum Durchführen der Enden der Tretkurbelwelle (2) aufweisen.

4. Antriebseinrichtung nach mindestens einem der vorangehenden Ansprüche, **dadurch gekennzeichnet, dass** die vormontierte Antriebseinrichtung (1) in den mit einem ersten Gehäusedeckel (71) verbundenen Gehäuserahmen (70) einsetzbar ist und dass der zweite Gehäusedeckel (72) mit dem Gehäuserahmen (70) zur Kapselung des Antriebsgehäuses (7) verbindbar ist.

5. Antriebseinrichtung nach mindestens einem der vorangehenden Ansprüche, **dadurch gekennzeichnet, dass** das Zugmittelgetriebe (6) aus einem Riemen- oder Kettengetriebe besteht.

6. Antriebseinrichtung nach Anspruch 5, **dadurch gekennzeichnet, dass** das Riemengetriebe einstufig mit einem Zahn-, Flach- oder Keilriemen als flexiblem Zugmittel (60) ausgebildet ist.

7. Antriebseinrichtung nach Anspruch 5, **dadurch gekennzeichnet, dass** das Kettengetriebe einstufig mit einer ein- oder zweifachen Rollenkette als flexiblem Zugmittel (60) ausgebildet ist.

8. Antriebseinrichtung nach mindestens einem der vorangehenden Ansprüche, **dadurch gekennzeichnet, dass** die erste Getriebestufe aus einem gerad- oder schrägverzahnten einstufigen Planetengetriebe (5) besteht, das ein feststehendes Hohlrad (54) aufweist, auf dessen Innenverzahnung mit einem Planetenträger (55) verbundene Planetenräder (51 - 53) ablaufen, die in Eingriff mit einem mit der Motorwelle (40) des Elektromotors (4) verbundenen Sonnenrad (50) stehen, und dass ein mit dem Planetenträger (55) verbundenes Zugmittelantriebsrad (61) eines als zweite Getriebestufe ausgebildeten Zugmittelgetriebes (6) drehbar auf einer Verlängerung der Motorwelle (40) aufgesteckt ist.

9. Antriebseinrichtung nach Anspruch 8, **dadurch gekennzeichnet, dass** das Zugmittelgetriebe (6) das mit dem Planetenträger (55) des Planetengetriebes (5) verbundene Zugmittelantriebsrad (61), das mit dem Zugmittelantriebsrad (61) in Eingriff stehende flexible Zugmittel (60) und ein mit dem flexiblen Zugmittel (60) in Eingriff stehendes, mit der Hohlwelle (3) koppelbares Zugmittelabtriebsrad (62) aufweist.

10. Antriebseinrichtung nach mindestens einem der vorangehenden Ansprüche, **gekennzeichnet durch** eine das flexible Zugmittel (60) zwischen dem Zugmittelantriebsrad (61) und dem Zugmittelabtriebsrad (62) umlenkende Einrichtung (9).

11. Antriebseinrichtung nach Anspruch 10, **dadurch gekennzeichnet, dass** die das flexible Zugmittel (60) zwischen dem Zugmittelantriebsrad (61) und dem Zugmittelabtriebsrad (62) umlenkende Einrichtung (9) in Richtung einer Vergrößerung des Umschlingungswinkels des Zugmittelantriebsrades (61) und/oder Zugmittelabtriebsrades (62) vorgespannt ist.

12. Antriebseinrichtung nach Anspruch 10 oder 11, **dadurch gekennzeichnet, dass** die das flexible Zugmittel (60) umlenkende und/oder vorspannende Einrichtung aus einer Umlenkrolle (9) besteht.

13. Antriebseinrichtung nach Anspruch 12, **dadurch gekennzeichnet, dass** die Umlenkrolle (9) im Wesentlichen senkrecht zur Längserstreckung des flexiblen Zugmittels (60) verstellbar ist.

14. Antriebseinrichtung nach Anspruch 12 oder 13, **gekennzeichnet durch** ein die Umlenkrolle (9) an das flexible Zugmittel (60) andrückendes Federelement.

## Claims

1. Drive device (1) for an electric bicycle, particularly for a hybrid drive pedelec operated with an electric motor and by muscle force, containing a frame with a seat tube (11), a lower tube (12) and lower stays (13, 14) of a rear structure of the electric bicycle, with a drive housing (7) which has
- a housing frame (70) on which there are formed a first pipe flange (73) which is connectable to the seat tube (11), a second pipe flange (74) which is connectable to the lower tube (12), and a third pipe flange (75) which is connectable to the lower stays (13, 14) of the rear structure of the frame of the electric bicycle, and also has a housing cover (71, 72) on each side, which housing covers are connected to the housing frame (70), and in which are arranged
- a hollow shaft (3) which is connected to a chain wheel of a chain drive of the electric bicycle,
- a pedal crankshaft (2) arranged coaxially to the hollow shaft (3) and couplable thereto, which crankshaft is connected to pedal cranks on each of its two ends,
- an electric motor (4) with a motor shaft (40) arranged parallel to and spaced apart from the hollow shaft (3), and
- a multistage drive means (5, 6) which contains
- a traction mechanism drive (6) having a traction mechanism drive gear (61) and a traction mechanism driven gear (62) which gears are interconnected via a flexible traction mechanism (60), and
- a planetary drive means (5) whose sun gear (50) is connected with the motor shaft (40) and mesh with planetary gears (51-53) which are mounted with a planetary gear carrier (55) which is connected to the traction mechanism drive gear (61) and also run over the interior toothing of a fixed ring gear (54),
wherein the distance of the hollow shaft (3) from the motor shaft (40) is smaller than the sum of the radii of the traction mechanism driven gear (62) and the fixed ring gear (54).

2. Drive device according to claim 1, **characterized in that** the pipe flanges (73-75) are connected to the seat tube (11), the lower tube (12), and the lower stays (13, 14) of the rear structure by means of welding or soldering.

3. Drive device according to claim 1 or 2, **characterized in that** the housing covers (71, 72) have openings (77, 78) for passing through the ends of the pedal crankshaft (2).

4. Drive device according to at least one of the preceding claims, **characterized in that** the preassembled drive device (1) can be inserted into the housing frame (70) connected to a first housing cover (71) and **in that** the second housing cover (72) can be connected to the housing frame (70) for encapsulating the drive housing (7).

5. Drive device according to at least one of the preceding claims, **characterized in that** the traction mechanism drive (6) consists of a belt drive or a chain drive.

6. Drive device according to claim 5, **characterized in that** the belt drive is formed in a single-stage manner with a toothed belt, flat belt, or V-belt as the flexible traction mechanism (60).

7. Drive device according to claim 5, **characterized in that** the chain drive is formed in a single-stage manner with a single or double roller chain as the flexible traction mechanism (60).

8. Drive device according to at least one of the preceding claims, **characterized in that** the first drive stage is comprised of a spur-toothed or helically toothed single-stage planetary drive means (5) having a fixed ring gear (54) which has planetary gears (51-53) which are connected to a planetary gear carrier (55), and which mesh with a sun gear (50) which is connected to the motor shaft (40) of the electric motor (4), which planetary gears also run over the interior toothing of said ring gear (54); and **in that** a second drive stage is comprised of a traction mechanism drive (6) having a traction mechanism drive gear (61) which is connected to the planetary gear carrier (55) and is rotatably mounted on an extension of the motor shaft (40).

9. Drive device according to claim 8, **characterized in that** the traction mechanism drive (6) presents the traction mechanism drive gear (61) which is connected to the planetary gear carrier (55) of the planetary drive means (5), further presents the flexible traction mechanism (60) which engages the traction mechanism drive gear (61), and presents a traction mechanism driven gear (62) which engages the flexible traction mechanism (60) and can be coupled to the hollow shaft (3).

10. Drive device according to at least one of the preceding claims; **characterized by** a deflecting device (9) which deflects the flexible traction mechanism (60) in the area between the traction mechanism drive gear (61) and the traction mechanism driven gear (62).

11. Drive device according to claim 10, **characterized in that** the deflecting device (9) which deflects the flexible traction mechanism (60) in the area between the traction mechanism drive gear (61) and the traction mechanism driven gear (62) is pre-tensioned in the direction of increasing the wrap angle of the traction mechanism drive gear (61) and/or of the traction mechanism driven gear (62).

12. Drive device according to claim 10 or 11, **characterized in that** the device which deflects and/or pre-stresses the flexible traction mechanism (60) is comprised of a deflecting roller (9).

13. Drive device according to claim 12, **characterized in that** the deflecting roller (9) is adjustable essentially perpendicularly to the longitudinal extent of the flexible traction mechanism (60).

14. Drive device according to claim 12 or 13, **characterized by a** spring element which urges the deflecting roller (9) against the flexible traction mechanism (60).

## Revendications

1. Dispositif d'entraînement (1) pour une bicyclette électrique, en particulier pour un vélo à assistance électrique à fonctionnement hybride avec moteur électrique et force musculaire, qui comprend un cadre avec un tube de selle (11), un tube oblique (12) et des bases (13, 14) d'une fourche arrière de la bicyclette électrique, avec un boîtier d'entraînement (7), qui présente
- un cadre de boîtier (70), sur lequel une première bride de tube (73) pouvant être reliée au tube de selle (11), une deuxième bride de tube (74) pouvant être reliée au tube oblique (12) et une troisième bride de tube (75) pouvant être reliée aux bases (13, 14) de la fourche arrière du cadre de la bicyclette électrique sont moulés, et des couvercles de boîtier (71, 72) reliés des deux côtés au cadre de boîtier (70),
et dans lequel sont agencés
- un arbre creux (3) relié à un pignon d'une transmission par chaîne de la bicyclette électrique,
- un arbre de pédalier (2) agencé coaxialement à l'arbre creux (3) et pouvant être couplé à l'arbre creux (3), et qui est relié à des pédales aux deux extrémités,
- un moteur électrique (4) avec un arbre moteur (40) agencé parallèlement et à distance de l'arbre creux (3) et
- une transmission à plusieurs niveaux (5, 6) avec
- une transmission par moyen de traction, qui comprend une roue d'entraînement de moyen de traction (61) et une roue de sortie de moyen de traction (62) pouvant être couplée à l'arbre creux (3), qui sont reliées l'une à l'autre par le biais d'un moyen de traction flexible (60), et avec
- un engrenage planétaire (5), dont la roue solaire (50) est reliée à l'arbre moteur (40) du moteur électrique (4) et est en prise avec des roues planétaires (51 - 53), qui sont logées sur un porte-satellite (55) relié à la roue d'entraînement de moyen de traction (61) et roulent sur la denture intérieure d'une roue creuse fixe (54),
dans lequel la distance entre l'arbre creux (3) et l'arbre moteur (40) est inférieure à la somme des rayons de la roue de sortie de moyen de traction (62) et de la roue creuse fixe (54).

2. Dispositif d'entraînement selon la revendication 1, **caractérisé en ce que** les brides de tube (73 - 75) sont reliées au tube de selle (11), au tube oblique (12) et aux bases (13, 14) de la fourche arrière par soudage ou brasage.

3. Dispositif d'entraînement selon la revendication 1 ou 2, **caractérisé en ce que** les couvercles de boîtier (71, 72) présentent des ouvertures (77, 78) pour le passage des extrémités de l'arbre de pédalier (2).

4. Dispositif d'entraînement selon au moins une quelconque des revendications précédentes, **caractérisé en ce que** le dispositif d'entraînement prémonté (1) peut être utilisé dans le cadre de boîtier (70) relié à un premier couvercle de boîtier (71) et **en ce que** le deuxième couvercle de boîtier (72) peut être relié au cadre de boîtier (70) pour l'encapsulage du boîtier d'entraînement (7).

5. Dispositif d'entraînement selon au moins une quelconque des revendications précédentes, **caractérisé en ce que** la transmission par moyen de traction (6) se compose d'une transmission par courroie ou par chaîne.

6. Dispositif d'entraînement selon la revendication 5, **caractérisé en ce que** la transmission par courroie est réalisée à un étage avec une courroie dentée, plate, ou trapézoïdale comme moyen de traction flexible (60).

7. Dispositif d'entraînement selon la revendication 5, **caractérisé en ce que** la transmission par chaîne est réalisée à un étage avec une chaîne à rouleaux simple ou double comme moyen de traction flexible (60).

8. Dispositif d'entraînement selon au moins une quelconque des revendications précédentes, **caractérisé en ce que** le premier étage de transmission se compose d'un engrenage planétaire (5) à un étage à denture droite ou hélicoïdale, qui présente une roue creuse stationnaire (54), sur la denture intérieure de laquelle roulent des roues planétaires (51 - 53) reliées à un porte-satellite (55), qui sont en prise avec une roue solaire (50) reliée à l'arbre moteur (40) du moteur électrique (4) et **en ce qu'**une roue d'entraînement de moyen de traction (61) reliée au porte-satellite (55) d'une transmission par moyen de traction (6) réalisée en tant que deuxième niveau de transmission est enfichée de manière rotative sur un prolongement de l'arbre moteur (40).

9. Dispositif d'entraînement selon la revendication 8, **caractérisé en ce que** la transmission par moyen de traction (6) comprend la roue d'entraînement de moyen de traction (61) reliée au porte-satellite (55) de l'engrenage planétaire (5), le moyen de traction flexible (60) en prise avec la roue d'entraînement de moyen de traction (61) et une roue de sortie de moyen de traction (62) pouvant être couplée à l'arbre creux (3), en prise avec le moyen de traction flexible (60).

10. Dispositif d'entraînement selon au moins une quelconque des revendications précédentes, **caractérisé par** un dispositif de déviation (9) du moyen de traction flexible (60) entre la roue d'entraînement de moyen de traction (61) et la roue de sortie de moyen de traction (62).

11. Dispositif d'entraînement selon la revendication 10, **caractérisé en ce que** le dispositif de déviation (9) du moyen de traction flexible (60) entre la roue d'entraînement de moyen de traction (61) et la roue de sortie de moyen de traction (62) est précontraint en direction d'une augmentation de l'angle d'enveloppement de la roue d'entraînement de moyen de traction (61) et/ou de la roue de sortie de moyen de traction (62).

12. Dispositif d'entraînement selon la revendication 10 ou 11, **caractérisé en ce que** le dispositif de précontrainte et/ou de déviation du moyen de traction flexible (60) se compose d'une poulie de renvoi (9).

13. Dispositif d'entraînement selon la revendication 12, **caractérisé en ce que** la poulie de renvoi (9) est réglable de manière sensiblement perpendiculaire à l'extension longitudinale du moyen de traction flexible (60).

14. Dispositif d'entraînement selon la revendication 12 ou 13, **caractérisé par** un élément ressort pressant la poulie de renvoi (9) contre le moyen de traction flexible (60).
